# EUROPÄISCHE PATENTSCHRIFT

(11) **EP 2 217 022 B1**
(45) Veröffentlichungstag und Bekanntmachung des Hinweises auf die Patenterteilung: **09.09.2015**
(21) Anmeldenummer: 10150945.3
(22) Anmeldetag: 18.01.2010
(51) Int. Cl.: H04W 24/10

(54) **Ermitteln des Nutzerverhaltens bei audiovisuellen Diensten für Mobilfunkendgeräte**
Determining the usage behaviour of audiovisual services for mobile radio end devices
Détermination du comportement d'utilisateurs dans le cadre de services audiovisuels pour terminaux de radio mobiles

(30) Priorität: 05.02.2009 DE 102009007607
(43) Veröffentlichungstag der Anmeldung: 11.08.2010
(73) Patentinhaber: Vodafone Holding GmbH, 40213 Düsseldorf (DE)
(72) Erfinder: Rodermund, Friedhelm, 40547 Düsseldorf (DE)
(74) Vertreter: Ring & Weisbrodt

(56) Entgegenhaltungen:
- US-A1- 2006 023 642
- US-A1- 2008 126 420
- US-A1- 2009 005 002

## Beschreibung

### Technisches Gebiet

Die Erfindung betrifft ein Verfahren zum Ermitteln eines Nutzerverhaltens von einem Benutzer eines audiovisuellen Dienstes gemäß den Merkmalen des Oberbegriffs des Anspruchs 1.

Weiterhin betrifft die Erfindung eine Einrichtung für ein Mobilfunknetz zum Ermitteln eines Nutzerverhaltens von einem Benutzer eines audiovisuellen Dienstes gemäß den Merkmalen des Oberbegriffs des Anspruchs 5.

### Stand der Technik

Kleine handgehaltene Mobilfunkendgeräte für eine Kommunikation über ein Mobilfunknetz, wie beispielsweise Handys oder Smartphones, eignen sich insbesondere durch ein hochauflösendes und großformatiges Display und entsprechende Empfangsmodule zunehmend auch zum Empfang von Fernsehsendungen, Videos und anderen audiovisuellen Inhalten.

Zur Übertragung von audiovisuellen Inhalten an Mobilfunkendgeräte sind verschiedene Technologien, wie z.B. DVB-H (Digital Video Broadcasting - Handhelds), FLO (Forward Link Only) und MBMS (Multimedia Broadcast Multicast Service) im Einsatz. DVB-H und FLO werden wie das digitale Antennenfernsehen DVB-T terrestrisch ausgesendet, sind aber speziell zum Empfang mit Mobilfunkendgeräten ausgebildet. Insbesondere ist die benötigte Leistungsaufnahme zum Empfangen von Daten durch entsprechende Empfangsmodule wesentlich kleiner. Im Unterschied zu FLO oder DVB-H werden Daten bei dem MBMS nicht über eigene Frequenzen und Sender, sondern über ein Mobilfunknetz nach dem UMTS-Standard übertragen. Somit wird kostengünstig eine bereits vorhandene UMTS-Infrastruktur zur Übermittlung von audiovisuellen Inhalten verwendet. Weiterhin ist über konventionelle breitbandige UMTS-Verbindungen eine Nutzung von Internet-Fernsehen möglich. Dabei werden audiovisuelle Inhalte als sogenannte IP-(Internet Protokoll) basierte Video-Datenströme an ein Mobilfunkendgerät übertragen.

Anbieter von audiovisuellen Diensten zur Übermittlung von audiovisuellen Inhalten, wie beispielsweise Netzwerkbetreiber oder Inhalteanbieter, haben ein sehr großes Interesse an dem Nutzerverhalten bei einer Nutzung der von ihnen angebotenen Dienste und Inhalte. Einerseits lassen sich anhand eines bekannten Nutzerverhaltens audiovisuelle Dienste oder Inhalte besser an die Bedürfnisse und Wünsche von Benutzern anpassen. Andererseits ist eine Vergebührung oft nur durch eine Kenntnis des Nutzerverhaltens, wie beispielsweise einer Einschaltquote, durchführbar. Von der Einschaltquote hängen u.a. die Preise für Werbung in den Inhalten ab.

Es sind verschiedene Mechanismen zum Ermitteln eines Nutzerverhaltens beim Nutzen von audiovisuellen Diensten mit einem Mobilfunkendgerät bekannt. Diese Mechanismen werden von den Herstellern der Mobilfunkendgeräte implementiert und ermitteln voreingestellte Nutzungsparameter, wie etwa Start- und Endzeit einer Nutzung oder ausgewählten Kanal bzw. ausgewähltes Programm. Anschließend werden die gemessenen Nutzungsparameter an einen Server im Mobilfunknetz übertragen. Dazu werden je nach Mobilfunkendgerät verschiedene Datenformate und Übertragungsprotokolle verwendet.

In der WO2008/007385 A2 wird ein Verfahren zur Steuerung von erweiterten Multimedia-Diensten für ein SIP-basiertes Telefon offenbart. Einem Benutzer wird ein Internettelefon zur Verfügung gestellt, welches z.B. in einem stationären Computer oder einem Laptop installiert ist. Eine Nutzung von zusätzlichen Multimedia-Diensten, wie Internet-TV, ist ebenfalls möglich. Bei einer Nutzung dieser Multimedia-Dienste wird das Benutzerverhalten registriert. So kann ein Benutzer je nach Benutzungsdauer des Internet-TV, welches Werbung enthält, einen entsprechenden Zeitraum gebührenfrei mit dem SIP-basierten Telefon telefonieren.

Die US 2006/0023642 A1 betrifft Vorrichtungen und Verfahren zur Verwendung von verteilten Netzwerkelementen zur Überwachung und Datenerfassung von bestimmten Netzwerkparametern. Gemäß den in der US 2006/0023642 A1 offenbarten Vorrichtungen und Verfahren werden eine Vielzahl von Endpunkten oder Benutzerendgeräten verwendet, um die tatsächliche Nutzung und Performance von Netzwerkelementen und Netzwerkschichten zu überwachen. Dadurch können wertvolle Diagnosedaten bezüglich der Performance von Diensten im Zusammenhang mit auftretenden Ereignissen in unterschiedlichen Netzwerkschichten dargestellt und analysiert werden. Dabei werden beispielsweise verteilte drahtlose Endgeräte ausgesucht und dazu verwendet, eine Überwachung von einem oder mehreren Parametern des drahtlosen Kommunikationsnetzwerks einzurichten und an eine Auswerteeinheit zu übertragen. Dazu wird ein Überwachungsprofil von einer zentralen Service Quality Plattform erstellt und an das drahtlose Endgerät übertragen. In dem Überwachungsprofil wird festgelegt, welche Netzwerkparameter bei einem Auftreten von bestimmten Ereignissen überwacht werden. Dadurch, dass eine Vielzahl von Überwachungspunkten innerhalb des drahtlosen Kommunikationsnetzwerks eingerichtet werden, insbesondere an unterschiedlichen Punkten des drahtlosen Kommunikationsnetzwerks, können bei Auftreten eines bestimmten Ereignisses wie einer Fehlfunktion, die erfassten Daten korreliert werden und folglich ein komplexer Netzwerkstatus abgebildet werden.

Nachteilig an den bekannten Verfahren und Vorrichtungen ist, dass ein Inhalteanbieter oder Mobilfunknetzbetreiber je nach Mobilfunkendgerät verschiedene voreingestellte und gemessene Nutzungsparameter mit unterschiedlichen, voreingestellten Datenformaten, Übertragungsprotokollen und Übertragungszeitpunkten erhält. Dieser Umstand erschwert eine Auswertung der gemessenen Nutzungsparameter erheblich. Bei einem Empfang und einer Auswertung von gemessenen Nutzungsparametern müssen mit großem Aufwand unterschiedliche Nutzungsparameter, Datenformate, Protokolle und Abfragezeiträume berücksichtigt werden.

### Offenbarung der Erfindung

Aufgabe der Erfindung ist es daher, Nachteile des Standes der Technik zu vermeiden und einen Empfang und eine Auswertung von gemessenen Nutzungsparametern bezüglich einer Nutzung eines audiovisuellen Dienstes mit einem Mobilfunkendgerät zu erleichtern.

Erfindungsgemäß wird die Aufgabe bei einem Verfahren der eingangs genannten Art zum Ermitteln eines Nutzerverhaltens von einem Benutzer eines audiovisuellen Dienstes, durch die Merkmale des kennzeichnenden Teils des Anspruchs 1 gelöst.

Weiterhin wird die Aufgabe mit einer Einrichtung der eingangs genannten Art für ein Mobilfunknetz zum Ermitteln eines Nutzerverhaltens von einem Benutzer eines audiovisuellen Dienstes gemäß dem Merkmal des kennzeichnenden Teils des Anspruchs 5 gelöst.

Die Erfindung beruht auf dem Prinzip, ein Messmodul in einem Mobilfunkendgerät mit einer Kontrolleinrichtung im Mobilfunknetz zu steuern und einzustellen. Dabei ist auch eine Steuerung und Einstellung von mehreren Messmodulen verschiedener Mobilfunkendgeräte durch die Kontrolleinheit möglich. Das Messmodul verfügt über entsprechende Mittel zur Steuerung durch die Kontrolleinheit in dem Mobilfunknetz.

Einem Mobilfunknetzbetreiber wird durch eine Verwendung des erfindungsgemäßen Verfahrens bzw. der erfindungsgemäßen Einrichtung mit der Kontrolleinrichtung eine sehr flexible und einheitliche Ermittlung von Nutzungsparametern bei einer Nutzung von audiovisuellen Diensten durch Benutzer ermöglicht. Mit Hilfe der Kontrolleinrichtung lässt sich das Messen und Übermitteln von Nutzungsparametern bei allen beteiligten Mobilfunkendgeräten unabhängig vom Hersteller der Mobilfunkendgeräte exakt nach den Vorgaben und Erfordernisse einer Auswertung zum Ermitteln eines Nutzerverhaltens steuern und einstellen. Eine Auswertung von gemessenen und in einer Sammeleinrichtung im Mobilfunknetz gespeicherten Nutzungsparametern wird daher wesentlich erleichtert.

Eine besonders vorteilhafte Ausgestaltung des erfindungsgemäßen Verfahrens zum Ermitteln eines Nutzerverhaltens von einem Benutzer eines audiovisuellen Dienstes wird durch Einstellen zu messender Nutzungsparameter, eines Datenformats für gemessene Nutzungsparameter, eines Übertragungsprotokolls und/oder eines Übertragungszeitpunkts oder Übertragungszeitintervalls durch die Kontrolleinrichtung über das Mobilfunknetz für das Messmodul erzielt. Durch das Einstellen dieser Eigenschaften in dem Messmodul eines Mobilfunkendgeräts lässt sich ein Messen und Übermitteln von Nutzungsparametern optimal für eine Auswertung anpassen. Nicht erwünschte Nutzungsparameter können abgeschaltet werden, wodurch eine Übertragung und Speicherung von überflüssigen Daten vermieden wird. Andererseits lassen sich zusätzlich erforderliche Nutzungsparameter zuschalten. Weiterhin wird bei Mobilfunkendgeräten verschiedener Hersteller eine Messung gleicher Nutzungsparameter und eine einheitliche Übertragung dieser Nutzungsparameter durchführbar. Insgesamt wird eine große Flexibilität und Einheitlichkeit beim Messen und Übertragen von Nutzungsparametern erreicht.

Als Nutzungsparameter werden in einer Ausbildung der Erfindung vorzugweise die Start- und Endzeit einer Nutzung eines audiovisuellen Dienstes, genutzte Kanäle oder Programmen und/oder eine Nutzungszeit pro Kanal gemessen. Eine Kenntnis dieser Nutzungsparameter ist für einen Mobilfunknetzbetreiber oder einen anderen Inhalteanbieter sehr wichtig, da aus diesen Werten direkte Rückschlüsse auf Vorlieben oder Abneigungen von Benutzern bezüglich bestimmter audiovisueller Inhalte möglich sind. Die Inhalte lassen sich somit besser an Wünsche der Benutzer anpassen. Weiterhin hängt eine Vergebührung der Nutzung von audiovisuellen Diensten und eine Festlegung der Preise für Werbung in den Inhalten im Wesentlich von diesen Nutzungsparametern ab.

In einer weiteren vorteilhaften Ausgestaltung der Erfindung übertragen die audiovisuellen Dienste die audiovisuellen Inhalte nach dem UMTS-, HSDPA-, MBMS-, DVB-H oder FLO-Standard. Diese Standards werden durch unterschiedliche Technologien realisiert und finden eine zunehmende Verbreitung und Anwendung. Das erfindungsgemäße Verfahren lässt sich somit universell für alle audiovisuellen Dienste und bei den entsprechenden Mobilfunkendgeräten anwenden, welche einen oder mehrere dieser Standards zur Übertragung von audiovisuellen Inhalten verwenden.

Ferner erfolgt in einer bevorzugten Ausgestaltung der Erfindung eine Signalisierung zwischen dem Messmodul und der Kontrolleinrichtung zumindest teilweise nach dem Open Mobile Alliance Device Management (OMA-DM) Standard. Dieser Standard wurde zur Verwaltung von Mobilfunkendgeräten entwickelt und ermöglicht insbesondere eine Konfiguration eines Mobilfunkendgeräts. Der OMA-DM-Standard wird von einer Vielzahl von Mobilfunkendgeräten verschiedener Hersteller unterstützt. Daher wird eine Signalisierung zwischen dem Messmodul von verschiedenen Mobilfunkendgeräten und der Kontrolleinheit bei einer Verwendung dieses Standards wesentlich vereinfacht.

Bei einer bevorzugten Einrichtung für ein Mobilfunknetz zum Ermitteln eines Nutzerverhaltens von einem Benutzer eines audiovisuellen Dienstes ist eine Auswertungseinheit für die Sammeleinrichtung und/oder das Messmodul zum Auswerten von gemessenen Nutzungsparametern vorgesehen. Mit einer Auswertungseinheit für das Messmodul ist eine Vorauswertung und Zusammenfassung von gemessenen Nutzungsparametern bereits in dem Mobilfunkendgerät vor einer Übertragung möglich. Dies führt zu einer deutlichen Reduzierung der zu übertragenden Datenmenge und entlastet so die zur Übertragung an und zum Speichern in der Sammeleinrichtung notwendigen Ressourcen. Durch eine Auswertungseinheit für die Sammeleinrichtung ist ebenfalls eine Reduzierung zu speichernder Daten möglich. Zudem werden die gemessenen Nutzungsparameter bereits bei der Sammeleinrichtung für eine spätere Verarbeitung ausgewertet und vorbereitet. Eine Verarbeitung ist daher zügiger und mit einer kleineren aber aussagekräftigeren Menge an Daten möglich.

Weitere Ausgestaltungen und Vorteile ergeben sich aus dem Gegenstand der Unteransprüche, sowie der Zeichnung mit der dazugehörigen Beschreibung.

Ein Ausführungsbeispiel der Erfindung ist nachstehend unter Bezugnahme auf die zugehörige Zeichnung näher erläutert.

### Kurze Beschreibung der Zeichnung

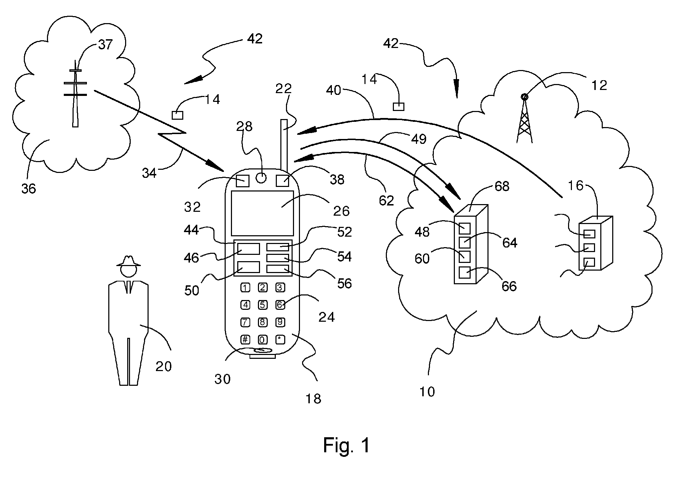

- Fig. 1: zeigt in einer schematischen Prinzipskizze ein Ausführungsbeispiel des erfindungsgemäßen Verfahrens und der erfindungsgemäßen Einrichtung zum Ermitteln des Nutzerverhaltens eines Benutzers eines audiovisuellen Dienstes für Mobilfunkendgeräte.

### Bevorzugtes Ausführungsbeispiel

In Fig. 1 wird mit 10 ein Mobilfunknetz bezeichnet. Das Mobilfunknetz 10 ist ein Mobilfunknetz der 2,5., 3. oder 4. Generation und ist beispielsweise nach dem GSM-, GPRS-, UMTS-, HSDPA-, CDMA2000-, FOMA-, TD-SCDMA-, LTE/SEA oder WiMAX-Standard ausgebildet. Dem Fachmann sind solche Mobilfunknetze mit den entsprechenden Bestandteilen geläufig. Der Einfachheit halber wird das Mobilfunknetz 10 daher nur durch eine Wolke mit einem darin enthaltenen Funkmast 12 stilisiert dargestellt. Über das Mobilfunknetz 10 werden u. a. audiovisuelle Dienste, wie beispielsweise Fernseh- oder Radioprogramme oder andere Multimediadaten für Benutzer angeboten. Dazu kann z.B. entweder ein Multimedia Broadcast Multicast Service (MBMS) oder eine herkömmliche, vorzugsweise paketorientierte DatenVerbindung verwendet werden. Audiovisuelle Inhalte 14 werden von einem Inhalte-Server 16 im Mobilfunknetz 10 oder einem, in Fig. 1 nicht dargestellten, externen und mit dem Mobilfunknetz 10 verbundenen Server eines Inhalteanbieters zur Verfügung gestellt.

Mit einem Mobilfunkendgerät 18 wird für einen Benutzer 20 eine Kommunikation mit anderen Benutzern über das Mobilfunknetz 10 oder eine Inanspruchnahme von Diensten mobil ermöglicht. Das Mobilfunkendgerät 18 verfügt dazu über ein Mobilfunkmodul 22 zum Senden und Empfangen von Daten über das Mobilfunknetz 10. Als Mobilfunkendgerät 18 kann beispielsweise ein Mobiltelefon, Handy, Autotelefon, Smartphone, ein stationärer Rechner (z.B. PC) oder mobiler Rechner (z.B. Notebook, PDA) oder ein anderes Gerät mit einer eingebauten oder über eine Schnittstelle angeschlossenen Mobilfunkschnittstelle 22 (z.B. eine PMCCIA-Karte) verwendet werden.

Zur Bedienung des Mobilfunkendgeräts 18 durch den Benutzer 20 ist eine Bedienungseinheit 24 vorgesehen. Mit einer Anzeige 26 werden empfangene oder zu sendende Daten dargestellt oder eine Bedienung durch den Benutzer 20 unterstützt. Ferner enthält das Mobilfunkendgerät 18 einen Akustikwandler 28 (z.B. ein Lautsprecher oder Kopfhörer) zum Umwandeln von elektronischen Signalen in akustische Signale. Zusammen mit einem Mikrophon 30 wird so eine verbale Kommunikation und zusammen mit der Anzeige 20 eine Darstellung von audiovisuellen Inhalten 14 und Multimediadaten durch das Mobilfunkendgerät 18 ermöglicht.

Weiterhin enthält das Mobilfunkendgerät 18 ein DVB-H-Modul 32 zum Nutzen eines DVB-H-Dienstes. Das DVB-H-Modul 32 ermöglicht einen Empfang und eine Aufbereitung von audiovisuellen Inhalten 14 nach dem DVB-H-Standard. Diese Inhalte werden als DVB-H-Funksignale, Pfeil 34, von Sendern auf bestimmten Frequenzen ausgestrahlt, wie es vom herkömmlichen digitalen terrestrischen Fernsehen (DVB-T) bekannt ist. Die dazu notwendige DVB-H-Senderinfrastruktur 36 ist dem Fachmann bekannt und wird in Fig. 1 der Einfachheit halber als Wolke mit stilisiertem Funkturm 37 dargestellt. Alternativ oder zusätzlich können auch Module zum Empfangen und Aufbereiten von audiovisuellen Inhalten in dem Mobilfunkendgerät 18 vorgesehen sein, welche nach anderen Standards audiovisuelle Inhalte oder Multimediadaten terrestrisch oder via Satellit ausstrahlen, z.B. nach dem DMB- (Digital Multimedia Broadcasting) Standard oder dem FLO- (Forward Link Only) Standard.

Um einen MBMS-Dienst des Mobilfunknetzes 10 nutzen zu können, enthält das Mobilfunkendgerät 18 ein MBMS-Modul 38. Das MBMS-Modul 38 empfängt über das Mobilfunkmodul 22 und eine Funkverbindung, Pfeil 40, audiovisuelle Inhalte 14 bzw. Multimediadaten von dem Inhalte-Server 16 über das Mobilfunknetz 10 und bereitet diese zur Darstellung mit der Anzeige 26 und dem Akustikwandler 28 auf. Alternativ oder zusätzlich kann auch ein Modul zum Empfangen und Aufbereiten von Internet-TV über eine herkömmliche IP-basierte Datenverbindung zwischen dem Mobilfunkendgerät 18 und dem Mobilfunknetz 10 vorgesehen sein.

Mit den oben beschriebenen Technologien zum Übertragen von audiovisuellen Inhalten 14 werden dem Benutzer verschiedene audiovisuelle Dienste 42 zum Empfangen von audiovisuellen Inhalten 14 angeboten.

Für ein Ermitteln des Verhaltens des Benutzers eines audiovisuellen Dienstes 42 ist in dem Mobilfunkendgerät ein Messmodul 44 vorgesehen. Das Messmodul 44 misst verschiedene, einstellbare Nutzungsparameter, wie beispielsweise Startzeit und Endzeit der Nutzung eines audiovisuellen Dienstes 42, ausgewählte Kanäle und Programme, eine Nutzungszeit pro Kanal, Umschaltzeiten, einen Eventtyp (z.B. Live TV, Videoclip usw.), dargestellte Werbespots und die Qualität eines Dienstes (QoS). Auch Aufenthaltsort, Benutzeridentität, Interaktivität, Mobilfunkendgerätetyp, und Subskription des Benutzers können mit dem Messmodul 44 festgestellt werden. Ferner sind alle Aktionen mit runtergeladenen Inhalten, wie beispielsweise Abspielen, Weiterleiten, Löschen usw. messbar.

Das Messmodul 44 eignet sich somit generell zum Messen von Nutzungsparametern audiovisueller Inhalte 14, welche durch Broadcast-, Multicast- oder Unicast-Dienste übertragen werden. Bei einem Broadcast-Dienst werden audiovisuelle Inhalte 14 über einen Kanal an viele Endgeräte übertragen (z.B. DVB-H, FLO und MBMS). Im Gegensatz dazu benutzt ein Multicast-Dienst zum Übertragen eines gleichen audiovisuellen Inhalts 14 an mehrere Endgeräte jeweils für jedes Endgerät einen separaten Kanal (z.B. Live-Videodatenstrom beim Internet-TV). Unicast-Dienste bieten individuelle und auswählbare audiovisuelle Inhalte 14 ebenfalls über einen eigenen Kanal für Endgeräte an (z.B. Video-on-Demand).

Gemessene Nutzungsparameter werden unmittelbar mit einer Übermittlungseinheit 46 an eine Sammeleinrichtung 48 im Mobilfunknetz 10 übermittelt, Pfeil 49, oder für eine spätere Übertragung in einem Speicher 50 des Messmoduls 44 zwischengespeichert. Durch einen Zeitgeber 52 für das Messmodul 44 werden Übertragungen zu bestimmten, einstellbaren Zeiten oder in einstellbaren Zeitintervallen ermöglicht. Mit einer Auswerteeinheit 54 des Messmoduls 44 wird eine erste Auswertung von gemessenen Nutzungsparametern bereits vor einer Übertragung durchführbar. Weiterhin enthält das Messmodul 44 eine Kontrolleinheit 56 zum Einstellen und Steuern des Messmoduls 44.

Mit einer Kontrolleinrichtung 60 im Mobilfunknetz 10 und der Kontrolleinheit 56 im Messmodul 44 lässt sich das Messmodul 44 über das Mobilfunknetz 10 einstellen und steuern. Dazu wird zur Signalisierung, Pfeil 62, beispielsweise das Open Mobil Alliance Device Management (OMA-DM) Protokoll verwendet. So wird ein Abschalten der Messung von nicht benötigten Nutzungsparametern oder ein Zuschalten von erwünschten Nutzungsparametern ermöglicht. Auch eine Einstellung bzw. Konfiguration von Datenformaten, Übertragungsprotokollen und Übertragungszeiten bzw. Übertragungsintervallen ist durch die Kontrolleinrichtung 60 durchführbar.

Die Kontrolleinrichtung 60, die Sammeleinrichtung 48, eine Auswertungseinrichtung 64 zum Auswerten von empfangenen Nutzungsparametern und ein Speicher 66 zum Speichern von empfangenen Nutzungsparametern und/oder Auswertungsergebnissen für einen späteren Abruf zur Verarbeitung sind in diesem Ausführungsbeispiel zentral in einem Nutzungsparameter-Server 68 vorgesehen. Alternativ ist aber auch eine dezentrale Anordnung einzelner oder aller Komponenten 48, 60, 64 und 66 in dem Mobilfunknetz 10 möglich. Mit der Kontrolleinrichtung 60 lässt sich ein einzelnes Messmodul 44 eines Mobilfunkendgeräts 18 oder eine Mehrzahl von Messmodulen 44 in verschiedenen Mobilfunkendgeräten 18 gleichzeitig steuern und einstellen.

Zum Ermitteln des Nutzerverhaltens des Benutzers 20 bei einer Inanspruchnahme eines audiovisuellen Dienstes 42 mit dem Mobilfunkendgerät 18 wird ein Mobilfunknetzbetreiber zunächst das Messmodul 44 einstellen bzw. konfigurieren. Dabei wird mit der Kontrolleinrichtung 60 eine Messung von erwünschten Nutzungsparametern aktiviert und von nicht benötigten Nutzungsparametern deaktiviert. Hierdurch wird eine Übermittlung bzw. ein Bericht auf die notwendigen Nutzungsparameter beschränkt. Dabei lassen sich durch die Kontrolleinrichtung 60 und die Kontrolleinheit 56 auch neue Nutzungsparameter festlegen oder vorhandene Nutzungsparameter modifizieren. Zudem werden Übermittlungszeitpunkte oder Übermittlungsintervalle optimal an die zur Auswertung benötigte Menge gemessener Nutzungsparametern angepasst. Weiterhin wird mit der Kontrolleinrichtung 60 von dem Netzwerkbetreiber ein gewünschtes Datenformat und Übertragungsprotokoll festgelegt. Diesen können somit für viele verschiedene Mobilfunkendgeräte 18 von unterschiedlichen Herstellern einheitlich eingestellt werden.

Anschließend werden von dem Messmodul 44 die eingestellten Nutzungsparameter gemessen und zu vorgegebenen Zeiten mit dem eingestellten Datenformat und Übertragungsprotokoll an die Sammeleinrichtung 48 übermittelt, Pfeil 49. Dabei ist eine erste Auswertung durch die Auswerteeinheit 54 in dem Messmodul 44 oder durch die Auswerteeinheit 64 im Mobilfunknetz 10 möglich. Mit der Kontrolleinrichtung 60 in dem Mobilfunknetz 10 lässt sich jederzeit eine Steuerung oder erneute Konfiguration des Messmoduls 44 vornehmen.

Einem Mobilfunknetzbetreiber wird daher eine sehr flexible und einheitliche Messung von Nutzungsparametern bei verschiedenen Mobilfunkendgeräten zum Ermitteln eines Nutzerverhaltens zur Verfügung gestellt.

## Patentansprüche

1. Verfahren zum Ermitteln eines Nutzerverhaltens von einem Benutzer (20) eines audiovisuellen Dienstes (42), welcher einen audiovisuellen Inhalt (14) gleichzeitig an eine Mehrzahl von Mobilfunkendgeräten (18) für zellulare Mobilfunknetze (10) übermittelt, enthaltend die Verfahrensschritte
a) Messen von Nutzungsparametern eines Benutzers (20) beim Nutzen eines audiovisuellen Dienstes (42) mit einem Mobilfunkendgerät (18) durch ein Messmodul (44) in dem Mobilfunkendgerät (18),
b) Übermitteln (49) der gemessenen Nutzungsparameter von dem Mobilfunkendgerät (18) über das Mobilfunknetz (10) an eine Sammeleinrichtung (48) im Mobilfunknetz (10),
c) Bereitstellen übermittelter Nutzungsparameter und/oder einer Auswertung der gemessenen Nutzungsparameter durch die Sammeleinrichtung (48) für eine Verarbeitung zum Ermitteln des Nutzerverhaltens von Benutzern (20), und
d) Steuern des Messmoduls (44) mit einer Kontrolleinrichtung (60) des Mobilfunknetzes (10),
**dadurch gekennzeichnet, dass**
eine Signalisierung (62) zwischen dem Messmodul (44) und der Kontrolleinrichtung (60) zumindest teilweise nach dem Open Mobile Alliance Device Management Standard erfolgt.

2. Verfahren nach Anspruch 1, **gekennzeichnet durch** Einstellen zu messender Nutzungsparameter, eines Datenformats für gemessene Nutzungsparameter, eines Übertragungsprotokolls und/oder eines Übertragungszeitpunkts **durch** die Kontrolleinrichtung (60) über das Mobilfunknetz (10) für das Messmodul (44).

3. Verfahren nach Anspruch 1 oder Anspruch 2, **dadurch gekennzeichnet, dass** als Nutzungsparameter die Start- und Endzeit einer Nutzung eines audiovisuellen Dienstes (42), genutzte Kanäle oder Programme und/oder eine Nutzungszeit pro Kanal gemessen werden.

4. Verfahren nach einem der Ansprüche 1 bis 3, **dadurch gekennzeichnet, dass** die audiovisuellen Dienste (42) die audiovisuellen Inhalte (14) nach dem UMTS-, HSDPA-, MBMS-, DVB-H oder FLO-Standard übertragen.

5. Einrichtung für ein Mobilfunknetz (10) zum Ermitteln eines Nutzerverhaltens von einem Benutzer (20) eines audiovisuellen Dienstes (42), welcher audiovisuelle Inhalte (14) gleichzeitig an eine Mehrzahl von Mobilfunkendgeräten (18) für zellulare Mobilfunknetze (10) übermittelt, enthaltend
a) ein Messmodul (44) in einem Mobilfunkendgerät (18) zum Messen von Nutzungsparametern eines Benutzers (20) beim Nutzen eines audiovisuellen Dienstes (42) mit dem Mobilfunkendgerät (18),
b) eine Übermittelungseinheit (46) in dem Mobilfunkendgerät (18) zum Übertragen der gemessenen Nutzungsparameter über das Mobilfunknetz (10),
c) eine Sammeleinrichtung (48) in dem Mobilfunknetz (10) zum Empfangen und Bereitstellen von übermittelten, gemessenen Nutzungsparametern für eine Verarbeitung zum Ermitteln des Nutzerverhaltens von Benutzern (20), und
d) eine Kontrolleinrichtung (60) in dem Mobilfunknetz (10) zum Steuern des Messmoduls (44) in dem Mobilfunkendgerät (18) vorgesehen ist,
**dadurch gekennzeichnet, dass** die Einrichtung ausgebildet ist, eine Signalisierung (62) zwischen dem Messmodul (44) und der Kontrolleinrichtung (60) zumindest teilweise nach dem Open Mobile Alliance Device Management Standard vorzunehmen.

6. Einrichtung für ein Mobilfunknetz (10) zum Ermitteln eines Nutzerverhaltens von einem Benutzer (20) eines audiovisuellen Dienstes (42) nach Anspruch 5, **dadurch gekennzeichnet, dass** eine Auswertungseinheit (54, 64) für die Sammeleinrichtung (48) und/oder das Messmodul (44) zum Auswerten von gemessenen Nutzungsparametern vorgesehen ist.

## Claims

1. A method for determining a usage behaviour of a user (20) of an audiovisual service (42) which simultaneously transmits an audiovisual content (14) to a plurality of mobile terminals (18) for cellular mobile radio networks (10), comprising the process steps:
a) measuring usage parameters of a user (20) when using an audiovisual service (42) on a mobile terminal (18) by means of a measuring module (44) in the mobile terminal (18),
b) transmitting (49) the measured usage parameters from the mobile terminal (18) via the mobile radio network (10) to a collection device (48) in the mobile radio network (10),
c) providing transmitted usage parameters and/or an evaluation of the measured usage parameters by the collection device (48) for a processing operation for determining the usage behaviour of users (20), and
d) controlling the measuring module (44) by means of a control device (60) of the mobile radio network (10),
**characterized in that**
a signalization (62) between the measuring module (44) and the control device (60) takes at least partially place according to the Open Mobile Alliance Device Management standard.

2. A method according to claim 1, **characterized by** setting usage parameters to be measured, a data format for measured usage parameters, a transmission protocol and/or a transmission time by the control device (60) via the mobile radio network (10) for the measuring module (44).

3. A method according to claim 1 or claim 2, **characterized in that** the starting and ending time of a use of an audiovisual service (42), used channels or programs and/or a utilization period per channel will be measured as usage parameters.

4. A method according to one of the claims 1 to 3, **characterized in that** the audiovisual services (42) transmit the audiovisual contents (14) according to the UMTS-, HSDPA-, MBMS-, DVB-H- or FLO- standard.

5. A device for a mobile radio network (10) for determining a usage behaviour of a user (20) of an audiovisual service (42) which simultaneously transmits audiovisual contents (14) to a plurality of mobile terminals (18) for cellular mobile radio networks (10), comprising
a) a measuring module (44) in a mobile terminal (18) for measuring usage parameters of a user (20) when using an audiovisual service (42) on the mobile terminal (18),
b) a transmission unit (46) in the mobile terminal (18) for transmitting the measured usage parameters via the mobile radio network (10),
c) a collection device (48) in the mobile radio network (10) for receiving and providing transmitted, measured usage parameters for a processing operation for determining the usage behaviour of users (20), and
d) a control device (60) in the mobile radio network (10) for controlling the measuring module (44) in the mobile terminal (18),
**characterized in that** the device is configured to carry out a signalization (62) between the measuring module (44) and the control device (60) at least partially according to the Open Mobile Alliance Device Management standard.

6. A device for a mobile radio network (10) for determining a usage behaviour of a user (20) of an audiovisual service (42) according to claim 5, **characterized in that** an evaluation unit (54, 64) is provided for the collection device (48) and/or the measuring module (44) for evaluating measured usage parameters.

## Revendications

1. Procédé de détermination d'un comportement d'utilisation d'un utilisateur (20) d'un service audiovisuel (42) qui transmet un contenu audiovisuel (14) simultanément à une pluralité de terminaux mobiles (18) destinés à des réseaux radio mobiles cellulaires (10), comprenant les étapes de procédé de :
a) mesurer des paramètres d'utilisation d'un utilisateur (20) à l'utilisation d'un service audiovisuel (42) sur un terminal mobile (18) par moyen d'un module de mesure (44) dans le terminal mobile (18),
b) transmettre (49) les paramètres d'utilisation mesurés du terminal mobile (18) via le réseau radio mobile (10) à un dispositif de collection (48) dans le réseau radio mobile (10),
c) fournir des paramètres d'utilisation transmis et/ou une évaluation des paramètres d'utilisation mesurés par le dispositif de collection (48) pour un traitement destiné à déterminer le comportement d'utilisation des utilisateurs (20), et
d) commander le module de mesure (44) par moyen d'un dispositif de contrôle (60) du réseau radio mobile (10),
**caractérisé en ce qu'**
une signalisation (62) entre le module de mesure (44) et le dispositif de contrôle (60) a lieu au moins partiellement selon le standard Open Mobile Alliance Device Management.

2. Procédé selon la revendication 1, **caractérisé par** le réglage des paramètres d'utilisation à mesurer, d'un format de données pour des paramètres d'utilisation mesurés, d'un protocole de transmission et/ou d'une heure de transmission par moyen du dispositif de contrôle (60) via le réseau radio mobile (10) pour le module de mesure (44).

3. Procédé selon la revendication 1 ou la revendication 2, **caractérisé en ce que** l'heure du début et de la fin d'une utilisation d'un service audiovisuel (42), des canaux ou des programmes utilisés et/ou une période d'utilisation par canal sont mesurés en tant que paramètres d'utilisation.

4. Procédé selon l'une des revendications 1 à 3, **caractérisé en ce que** les services audiovisuels (42) transmettent les contenus audiovisuels (14) selon le standard UMTS, HSDPA, MBMS, DVB-H ou FLO.

5. Dispositif destiné à un réseau radio mobile (10) pour déterminer un comportement d'utilisation d'un utilisateur (20) d'un service audiovisuel (42) qui transmet des contenus audiovisuels (14) simultanément à une pluralité de terminaux mobiles (18) destinés à des réseaux radio mobiles cellulaires (10), comprenant
a) un module de mesure (44) dans un terminal mobile (18) pour mesurer des paramètres d'utilisation d'un utilisateur (20) à l'utilisation d'un service audiovisuel (42) sur le terminal mobile (18),
b) une unité de transmission (46) dans le terminal mobile (18) pour transmettre les paramètres d'utilisation mesurés via le réseau radio mobile (10),
c) un dispositif de collection (48) dans le réseau radio mobile (10) pour recevoir et fournir des paramètres d'utilisation transmis et mesurés pour un traitement destiné à déterminer le comportement d'utilisation des utilisateurs (20), et
d) un dispositif de contrôle (60) dans le réseau radio mobile (10) pour commander le module de mesure (44) dans le terminal mobile (18), **caractérisé en ce que** le dispositif est configuré pour réaliser une signalisation (62) entre le module de mesure (44) et le dispositif de contrôle (60) au moins partiellement selon le standard Open Mobile Alliance Device Management.

6. Dispositif destiné à un réseau radio mobile (10) pour déterminer un comportement d'utilisation d'un utilisateur (20) d'un service audiovisuel (42) selon la revendication 5, **caractérisé en ce qu'**une unité d'évaluation (54, 64) est prévue pour le dispositif de collection (48) et/ou le module de mesure (44) pour évaluer des paramètres d'utilisation mesurés.
